# EUROPÄISCHE PATENTSCHRIFT

(11) **EP 0 444 173 B1**
(45) Veröffentlichungstag und Bekanntmachung des Hinweises auf die Patenterteilung: **20.07.1994**
(21) Anmeldenummer: 90913462.9
(22) Anmeldetag: 19.09.1990
(51) Int. Cl.: G01F 23/00, G01F 23/28, B06B 1/06

(54) **VORRICHTUNG ZUR FESTSTELLUNG UND/ODER ÜBERWACHUNG EINES VORBESTIMMTEN FÜLLSTANDES IN EINEM BEHÄLTER**
DEVICE FOR DETERMINING AND/OR MONITORING A PREDETERMINED VOLUME IN A CONTAINER
DISPOSITIF POUR CONSTATER ET/OU CONTROLER UN NIVEAU DE REMPLISSAGE PREDETERMINE DANS UN RECIPIENT

(30) Priorität: 21.09.1989 DE 3931453
(43) Veröffentlichungstag der Anmeldung: 04.09.1991
(73) Patentinhaber: Endress u. Hauser GmbH u.Co., D-79689 Maulburg (DE)
(72) Erfinder: DREYER, Volker, D-7850 Lörrach-Haagen (DE)
(74) Vertreter: Leiser, Gottfried, Dipl.-Ing.
(86) Internationale Anmeldenummer: DE9000718
(87) Internationale Veröffentlichungsnummer: WO9104467

(56) Entgegenhaltungen:
- DE-A- 1 597 003
- DE-A- 1 773 815
- DE-A- 2 424 326
- DE-A- 3 336 991
- DE-C- 3 623 741
- DERWENT'S ABSTRACT, No. 83-819 869/46, SU 993 132, publ. week 8346.

## Beschreibung

Die Erfindung betrifft eine Vorrichtung zur Feststellung und/oder Überwachung eines vorbestimmten Füllstandes in einem Behälter, gemäß dem Oberbegriff des Anspruchs 1.

Eine Vorrichtung dieser Art ist aus der DE-AS 17 73 815 bekannt. Im Vergleich zu anderen bekannten Vorrichtungen mit einem einzigen in den Behälter ragenden Schwingstab ergibt sie den Vorteil, daß sich die von jedem Schwingstab auf die Einspannung der Membran ausgeübten Wechselkräfte in Folge der Gegensinnigkeit der Schwingungen gegenseitig aufheben, so daß keine Schwingungsenergie durch Übertragung auf die Behälterwand verloren geht und auch die Einspannung mechanisch weniger belastet wird. Bei dieser bekannten Vorrichtung sind die mit der Membran verbundenen Enden der Schwingstäbe durch zwei mechanisch voneinander entkoppelte Brücken miteinander verbunden, von denen jede aus einen auf der Membran aufliegenden Joch und einem das Joch überspannenden Bügel besteht. Die eine Brücke ist mit dem Erregungswandler und die andere Brücke mit dem Empfangswandler dadurch gekoppelt, daß das piezoelektrische Element des Wandlers zwischen dem Bügel und dem Joch eingespannt ist. Der Erregungswandler ist an den Ausgang eines Verstärkers angeschlossen, dessen Eingang mit dem Empfangswandler verbunden ist, so daß eine Selbsterregung von Schwingungen mit der Eigenresonanzfrequenz des mechanischen Schwingungsgebildes erfolgt.

Die an den Ausgang des Verstärkers angeschlossene Auswerteschaltung ist so ausgebildet, daß sie auf Amplitudenänderungen anspricht.Die Wirkungsweise dieser Vorrichtung beruht darauf, daß die mechanischen Schwingungen der Schwingstäbe beim Eintauchen in das Füllgut bedämpft werden, so daß sich eine Verringerung der Schwingungsamplitude ergibt, die von der Auswerteschaltung festgestellt wird und die Auslösung eines Anzeige- und/oder Schaltvorgangs verursacht.

Es hat sich gezeigt, daß diese bekannte Vorrichtung in Folge der Ausbildung des mechanischen Schwingungsgebildes und der Anordnung der piezoelektrischen Wandler eine verhältnismäßig starke Bedämpfung der Schwingstäbe durch das Füllgut voraussetzt, damit ein sicheres Ansprechen auf die Amplitudenveränderungen gewährleistet ist. Diese Vorrichtung kann daher zur Überwachung von Füllgütern verwendet werden, die bei Bedeckung der Schwingstäbe eine starke Bedämpfung verursachen, wie Schüttstoffe oder Flüssigkeiten hoher Viskosität.

Eine andere Vorrichtung der gleichen Art mit zwei in den Behälter ragenden Schwingstäben ist aus der DE-PS 33 36 991 bekannt. Der Gegenstand dieser Patentschrift zeigt eine auf der den Schwingstäben abgewandten Seite der Membran angeordnete Brücke, welche durch biegeelastische, an den Enden jeweils starr mit dem Schwingstab verbundene stabförmige Stützen im Abstand von der Membran gehalten ist. Die piezoelektrischen Elemente des Erregungswandlers und des Empfangswandlers sind bei dieser bekannten Vorrichtung in einem Stapel angeordnet, der unter konvexer Vorspannung der Membran zwischen der Brücke und dem zwischen den Schwingstäben liegenden Teil der Membran eingespannt ist. Mit dem Gegenstand der DE-PS 33 36 991 ist bereits die Aufgabe gelöst, eine Vorrichtung dieser Art mit zwei in den Behälter ragenden Schwingstäben so auszubilden, daß sie für Füllgüter beliebiger Art geeignet ist, und mit einer niedrigen Erregungswechselspannung und geringer Erregungsenergie betrieben werden kann.

Von dieser Vorrichtung ausgehend, stellt sich die vorliegende Erfindung die Aufgabe, eine Vorrichtung zur Feststellung und/oder Überwachung eines vorbestimmten Füllstandes in einem Behälter zu schaffen, welche mindestens zwei in den Behälter ragende Schwingstäbe aufweist, ebenfalls mit einer niedrigen Erregungswechselspannung und geringer Erregungsenergie betrieben werden kann, jedoch einen aus wenigen Teilen bestehenden vereinfachten Erregungs- und Empfangswandler aufweist und somit einfacher und preisgünstiger herzustellen ist.

Gelöst wird diese Aufgabe durch die in den Patentansprüchen gekennzeichneten Merkmale.

Die erfindungsgemäße Vorrichtung bringt darüber hinaus weiter den Vorteil, daß die, von der Längenveränderung der piezoelektrischen Elemente stammenden und auf die Membran wirkenden Momente vergrößert sind und dadurch eine Vergrößerung der Schwingungsamplitude der Schwingstäbe bewirken.

Eine vorteilhafte Ausgestaltung und Weiterbildung der Erfindung ist in den Unteransprüchen gekennzeichnet.

Weitere Vorteile und Merkmale der Erfindung ergeben sich aus der folgenden Beschreibung eines Ausführungsbeispieles, das in den Zeichnungen dargestellt ist. In den Zeichnungen zeigen:
- Fig. 1:: einen teilweisen Längsschnitt durch die erfindungsgemäße Vorrichtung.
- Fig. 2:: einen vergrößerten Längsschnitt durch das Einschraubstück der erfindungsgemäßen Vorrichtung von Fig. 1.

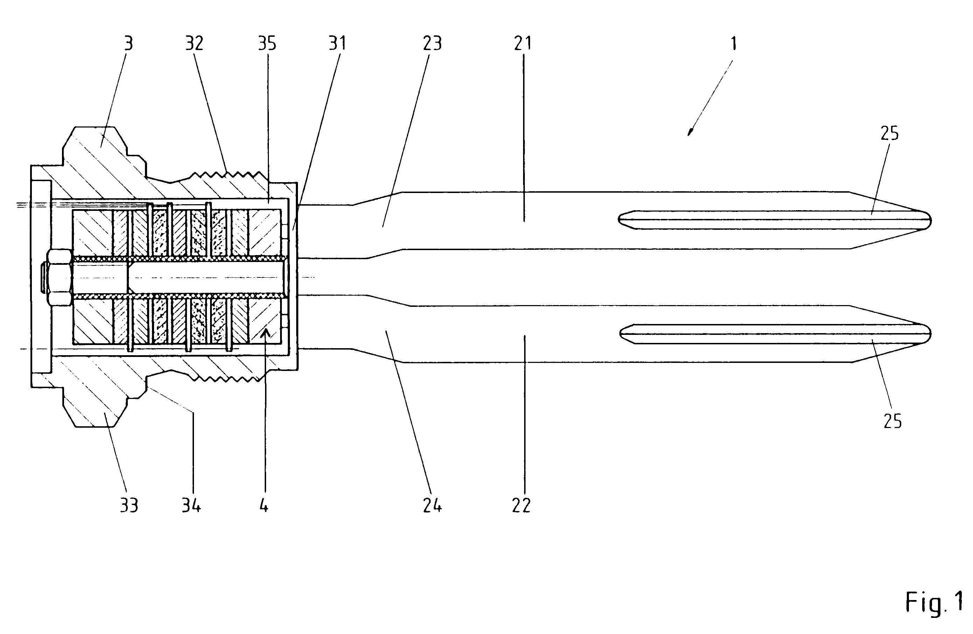

In Fig. 1 ist unter 1 eine Vorrichtung zur Feststellung und/oder Überwachung eines vorbestimmten Füllstandes dargestellt. Sie besteht aus den Schwingstäben 21, 22, dem Einschraubstück 3 und dem Erregungs- und Empfangswandler 4. Die Schwingstäbe 21, 22 ragen in das Innere eines nicht dargestellten Behälters, dessen Füllstand mittels der Vorrichtung 1 festgestellt oder überwacht werden soll. Sie sind von gleicher Form und lediglich gegeneinander um ihre Längsachse 180 Grad gedreht angeordnet. Beide Schwingstäbe sind auf der, dem Behälterinnern abgewandten Seite fest mit der Membran 31 verbunden, welche das Innere des Einschraubstückes 3 zum Behälterinnenraum hin abschließt. Jeder der Schwingstäbe 21, 22 ist mit einer Kröpfung 23, 24 versehen, so daß die im wesentlichen parallel nebeneinander liegenden Hauptteile der Schwingstäbe einen größeren Abstand voneinander haben als die mit der Membran verbundenen Enden. Durch die Kröpfungen 23, 24 wird bewirkt, daß von der Membran 31 noch mitübertragene Reste von longiditunalen Schwingungen ebenfalls in quer zu den Schwingstäben gerichtete Schwingungen umgewandelt werden. Die Hauptteile der Schwingstäbe haben einen runden Querschnitt und sind an den freien Enden zugespitzt. Die gekröpften Abschnitte 23, 24 verbreitern sich zu einem größeren unrunden Querschnitt an der Verbindungsstelle mit der Membran 31.

Am freien Ende jedes Schwingstabes 21, 22 ist ein Paddel 25 senkrecht zu der die Achsen der Schwingstäbe enthaltenden Ebene angebracht. Jede der Paddel 25 erstreckt sich vom freien Ende des Schwingstabes über eine verhältnismäßig große Länge, die zwischen 40 und 60 % der Länge der Schwingstäbe beträgt und vorzugsweise bei etwa 50 % dieser Länge liegt. Dagegen ist die Breite jedes Paddels senkrecht zur Längsachse des Schwingstabes wesentlich kleiner als die Längenausdehnung. Diese Breite der Paddel 25 und die Kröpfungen 23, 24 sind so aufeinander abgestimmt, daß die Schwingstäbe 21, 22 mit den daran angebrachten Paddeln 25 durch eine Öffnung hindurchgeführt werden können, die in die nicht dargestellte Behälterwand eingebracht worden ist. Trotz der dadurch bedingten, verhältnismäßig geringen Breite der Paddel 25 ergibt sich in Folge der großen Längenausdehnung der Paddel eine große wirksame Paddelfläche.

Das Einschraubstück 3 ist von zylindrischer Form und weist ein zylindrisches Außengewinde 32 auf, mit welchem die Vorrichtung 1 in der nicht dargestellten Wand des Behälters, dessen Füllstand mit der Vorrichtung festgestellt und/oder Überwacht werden soll befestigt ist. Dazu durchdringt eine Bohrung die Behälterwand und ist mit einem zylindrischen Innengewinde versehen. Zum Einschrauben der Vorrichtung 1 in die Behälterwand ist an dem Einschraubstück 3 ein Sechskant 33 angeformt, dessen Flächenabstand der Schlüsselweite eines Schraubenschlüssels entspricht. Der druckdichte Verschluß wird durch eine ringförmige Dichtfläche 34 gewährleistet, und geschieht unter Zwischenfügung einer nicht dargestellten ringförmigen Dichtung und der Behälterwand. Das Innere des Einschraubstückes 3 durchdringt, auf der den Schwingstäben 21, 22 abgewandten Seite ein zylindrischer Hohlraum 35, dessen axiale Erstreckung so gewählt ist, daß lediglich ein geringes Reststück des Einschraubstückes 3 nicht durchdrungen wird, welches die Membran 31 der Vorrichtung 1 bildet. Der Erregungs- und Empfangswandler 4 ist in dem zylindrischen Hohlraum 35 des Einschraubstückes 3 untergebracht.

Vorzugsweise sind die Schwingstäbe 21, 22, die Paddel 25, das Einschraubstück 3 und die Membran 31 als einstückiges metallisches Formteil hergestellt.

Selbstverständlich kann der Einbau der Vorrichtung 1 an jeder beliebigen Stelle des Behälters erfolgen. So z. B. in der Wandung oder in dem Deckel, je nach der Aufgabe, wie die Messung und/oder Überwachung des Füllstandes erfolgen soll.

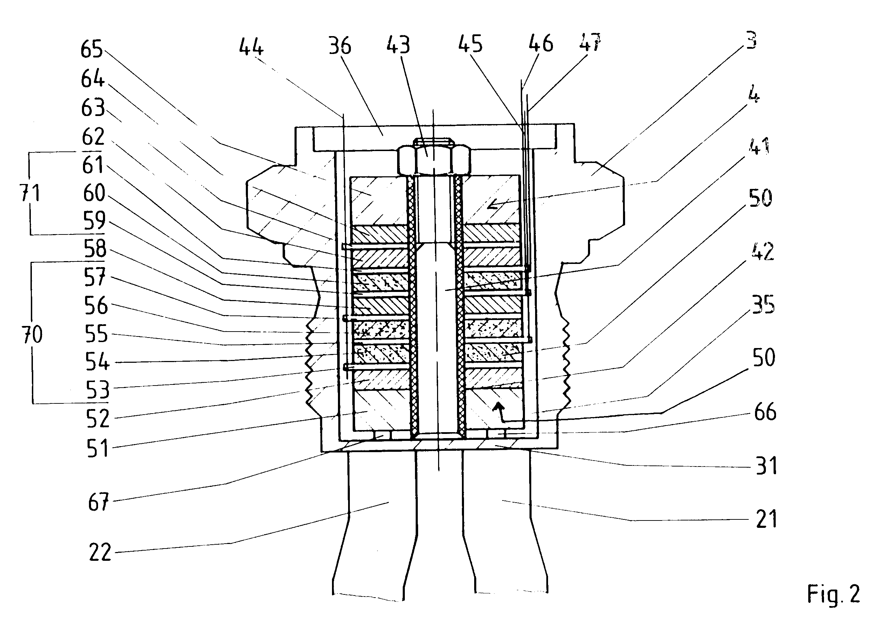

Der Aufbau des Erregungs- und Empfangswandlers 4 ist in Fig. 2 gezeigt. Er besteht aus der Spannschraube 41, welche fest mit der Membran 31 verbunden ist. Dies kann auf jede, dem Fachmann bekannte Art wie Schweißen, Kleben usw. erfolgen. Die Spannschraube 41 kann aber auch Teil des einstückigen metallischen Formteiles sein, als welches das Einschraubstück 3 einschließlich der Schwingstäbe 21, 22 vorzugsweise hergestellt werden kann.

Die Spannschraube 41 ist so an der Membran 31 angeordnet, daß ihre Symmetrieachse mit der der Membran 31 zusammenfällt und ragt in den zylindrischen Hohlraum 35. Weiter besteht der Erregungs- und Empfangswandler 4 aus dem Isolierrohr 42, der 6kt-Mutter 43, den Verbindungsleitungen 44, 45, 46 47 sowie den Piezostapel 50 mit den folgenden Bestandteilen:
- Metallring 51
- Isolierring 52
- Elektrodenring 53
- ringförmigen piezoelktrischen Element 54
- Elektrodenring 55
- ringförmigen piezoelektrischen Element 56
- Elektrodenring 57
- Isolierring 58
- Elektrodenring 59
- ringförmigen piezoelektrischen Element 60
- Elektrodenring 61
- Isolierring 62
- Elektrodenring 63
- Isolierring 64
- Metallring 65
Darin bilden die Elektrodenringe 53, 55 und 57 sowie die ringförmigen piezoelektrischen Elemente 54 und 56 den Erregungswandler 70, und die Elektrodenringe 59 und 61 sowie das piezoelektrische Element 60, den Empfangswandler 71 des Erregungs- und Empfangswandlers 4. Das Isolierrohr 42 bildet die elektrische Isolierung der Spannschraube 41 gegenüber den Bestandteilen des Piezostapels 50.

Alle Bestandteile des Piezostapels haben bei dem dargestellten Beispiel vorzugsweise den gleichen ringförmigen Querschnitt, so daß die Wandlersäule zylindrisch ist, und von der Spannschraube 41 geführt wird.

An jeder Elektrode ist noch eine aus dem Piezostapel 50 herausragende Lötfahne angeformt. Die Metallringe 51 und 65 bestehen vorzugsweise aus Messing und dienen einerseits als Abstands stücke zur Erzielung der erforderlichen Länge des Piezostapels 50 zwischen der Membran 31 und der 6kt-Mutter 43, und andererseits zur Übertragung der Kräfte auf die übrigen Bestandteile des Stapels. Insbesondere besteht die Aufgabe der Metallringe 51, 65 darin, daß der, von der 6kt-Mutter erzeugte Flächendruck parallel auf die piezoelektrischen Elemente 54, 56, 60 übertragen wird und damit eine Biegung der sehr bruchempfindlichen piezoelektrischen Elemente ausgeschlossen ist. Der Metallring 51 bewirkt, daß die von der Vorspannung und den Schwingungen stammenden Verbiegungen der Membran 31 nicht auf die piezoelektrischen Elemente 54, 56, 60 übertragen werden. Auch diese Maßnahme verhindert, daß die bruchempfindlichen piezoelektrischen Elemente auf Biegung beansprucht werden. Die an dem Metallring 51 angeformten Druckzapfen 66, 67 dienen dazu, die von den Erregungswandler 70 ausgehenden Längenveränderungen der piezoelektrischen Elemente 54, 56 auf die Membran 31 zu übertragen. Die Druckzapfen 66, 67 sind symmetrisch gegenüberliegend auf einem Kreisring angeordnet, welcher eine Lage koaxial zur Symmetriachse der Membran 31 einnimmt. Der Durchmesser des Kreisringes ist so gewählt, daß die Symmetrieachse der Druckzapfen 66, 67 mit der Symmetrieachse der Schwingstäbe 21, 22 zusammenfällt.

Da die zwischen Membran 31 und Metallring 51 angordneten Druckzapfen 66, 67 bewirken, daß der Metallring 51, und damit der Piezostapel 50, sich stets gleichmäßig an der Membran abstützt, ist es erfindungsgemäß auch möglich, an den Metallring 51 weitere Druckzapfen anzuformen. Diese müssen dann so auf dem Kreisring angeordnet sein, daß alle Druckzapfen einen gleichen Abstand voneinander haben. Dadurch ist es möglich, außer den dargestellten Schwingstäben 21, 22 weitere Schwingstäbe an der Membran 31 anzuordnen, deren Symmetrieachse dann ebenfalls mit der Symmetrieachse der Druckzapfen zusammenfallen muß. Dies könnte dann notwendig werden, wenn mit der Vorrichtung 1, Flüssigkeiten sehr niedriger Viskosität festgestellt und/oder überwacht werden soll.

Gemäß einer vorteilhaften Ausbildung kann der Metallring 51, zusammen mit den Zapfen 66 und 67, ein einziges Bauteil bilden. Es ist aber auch möglich, die Druckzapfen 66, 67 einstückig mit der Membran 31 herzustellen. Oder aber die Zapfen 66, 67 als Einzelsteile herzustellen und durch Schweißen, Kleben oder jede andere, dem Fachman bekannte Verbindungstechnik mit der Membran 31, oder dem Metallring 51 zu verbinden.

In axialer Fortsetzung des Einschraubstückes 3, ist an diesem, auf der den Schwingstäben 21, 22 abgewandten Seite ein nicht dargestellter Elektronikkopf angeordnet. Er enthält die elektronische Schaltung der Vorrichtung 1. Er ist von einem Gehäuse umgeben. Die zylindrische Ausnehmung 36, welche sich auf der den Schwingstäben abgewandten Seite ein Stück axial erstreckt und einen größeren Durchmesser als der Hohlraum 35 aufweist, dient der Aufnahme des Elektronikkopfgehäuses. Die nicht dargestellte elektronische Schaltung, ist über die Verbindungsleitungen 44, 45, 46, 47 mit dem Erregungs- und Empfangswandler 4 elektrisch verbunden.

Der Erregungswandler 70 hat die Aufgabe, eine von der elektrischen Schaltung über die Verbindungsleitungen 44, 45 gelieferte Wechselspannung in mechanische Schwingungen der Schwingstäbe 21 und 22 umzuwandeln. Die beiden Elektroden 53 und 57 sind mit dem einen Pol der Wechselspannungsquelle, vorzugsweise Masse, verbunden, und die Elektrode 55 ist an den anderen Pol der Wechselspannungsquelle angeschlossen. Die piezoelektrischen Elemente 54 und 56 sind daher elektrisch parallel und mechanisch in Serie geschaltet. In Folge der angelegten Wechselspannung erfährt jedes der piezoelektischen Elemente 54 und 56 eine Verformung (Dickenänderung) in der Achsrichtung des Piezostapels 50, die der angelegten Spannung proportional ist.

Die mechanischen Verformungen der piezoelektrischen Elemente 54 und 56 addieren sich, so daß für eine gegebene Größe der angelegten Wechselspannung eine Verdoppellung der Längenänderung des Piezostapels 50 erzielt wird.

Der Empfangswandler 71 hat die Aufgabe, die mechanischen Schwingungen der Schwingstäbe 21, 22 und der Membran 31 in ein elektrisches Ausgangssignal umzuwandeln, welches der elektronischen Schaltung über die Verbindungsleitungen 46, 47 zugeführt wird. Die Elektrode 63 liegt an Masse und dient zur Abschirmung des Empfangswandlers 71. Zur Abschirmung des Empfangswandlers 71 auf der anderen Seite wird die Tatsache ausgenutzt, daß die benachbarte Elektrode 57 des Erregungswandlers 70 an Masse liegt, und somit sogleich als Abschirmelektrode für den Empfangswandler 71 verwendet werden kann. Dadurch erübrigt sich die Anbringung einer zusätzlichen Abschirmelektrode auf dieser Seite des Empfangswandlers 71.

Die Funktion der Erregungs- und Empfangswandlers 4 soll im folgenden erläutert werden. Infolge der - durch die Spannschraube 41 und die 6kt-Mutter 43 über den Piezostapel 50 und die Druckzapfen 66,67 - erzeugten Vorspannung ist die Membran 31 konkav durchgebogen, wodurch die Schwingstäbe 21 und 22 nach innen verschwenkt sind. Die Vorspannkraft wird somit im Gegensatz zu den bisher bekannten Stand der Technik nur von der Membran 31 elastisch aufgenommen und die Federwirkung der Membran 31 gleicht auch unterschiedliche Wärmeausdehnungen aus.

Wenn der Piezostapel 50 infolge der an den Erregungswandler 70 angelegten Wechselspannung gegenüber seiner Ruhelage vergrößert ist, wird die vorgespannte Membran 31 noch weiter konkav durchgebogen, wodurch die Schwingstäbe 21 und 22 weiter nach innen verschwenkt werden. Wenn dagegen in der anderen Halbperiode der Wechselspannung die Länge des Piezostapels 50 gegenüber seiner Ruhelänge verkürzt ist, können die Schwingstäbe 21, 22 nach außen schwingen, während die Durchbiegung der Membran 31 zunächst zurückgeht und dann, je nach der eingestellten Vorspannung, in eine entgegengesetzte Durchbiegung übergehen kann.

Die Durchbiegung ist in Wirklichkeit sehr klein und kann beispielsweise in der Größenordnung von einigen µm liegen.

Für den Fachmann ist nun erkennbar, daß durch die Wirkung des Erregungswandlers 70 in dem Piezostapel 50 die Schwingstäbe 21 und 22 in gegensinnige Schwingungen quer zu Ihren Längsachsen, in gemeinsamen Ebenen die die Längsachsen enthaltenen, versetzt werden. Der dargestellte Aufbau und die Bemessung der Teile ergibt eine große Übersetzungswirkung, so daß die zur Erzielung einer ausreichenden Schwingungsamplitude erforderliche Verformung der piezoelektrischen Elemente 54, 56 sehr klein ist. In Folge der Gegensinnigkeit der Schwingungen heben sich die von jedem Schwingstab 21, 22 auf die Einspannung der Membran 31 ausgeübten Wechselkräfte gegenseitig auf, so daß keine Schwingungsenergie durch Übertragung auf das Einschraubstück 3 und die nicht dargestellte Behälterwand verloren geht.

Die Rückholfeder des, aus den Schwingstäben 21, 22 und der Membran 31 gebildeten mechanischen Schwingungssystems ist durch die Membran 31 gebildet. Die Masse des mechanischen Schwingungssystem besteht einerseits aus der Masse der Schwingstäbe 21 und 22 und andererseits aus der von den Schwingstäben bei der Schwingbewegung mitgenommenen Masse des umgebenden Mediums. Diese mitgenommene Masse wird durch die quer zu der Schwingungsrichtung angeordneten Paddel 25 vergrößert. Die Eigenresonanzfrequenz des mechanischen Schwingungssystems hängt einerseits von der Federkonstante des Federsystems ab, die als konstant angenommen werden kann, und andererseits von der Gesamtmasse, die in Abhängigkeit von der mitgeführten Masse veränderlich ist. Wenn sich die Schwingstäbe 21, 22 mit ihren Paddeln 25 in Luft befinden, ist die mitgeführte Masse der Luft vernachlässigbar und es stellt sich eine Eigenresonanzfrequenz ein, die im Wesentlichen durch die Masse der Schwingstäbe 21, 22 und der Membrandicke 31 bestimmt ist. Wenn dagegen die Schwingstäbe 21, 22 mit ihren Paddeln 25 in ein Füllgut eintauchen, ändert sich die mitgeführte Masse und damit die Eigenresonanzfrequenz des mechanischen Schwingungssystems. Die dargestellte Form der Paddel 25 ergibt unter Berücksichtigung der durch das Einschraubloch in der Behälterwand vorgegebenen Beschränkung der Breite eine optimale Wirkung. Es hat sich gezeigt, daß die durch die weitere Verlängerung der Paddel 25 über 60 % der Schwingstablänge hinaus erzielte Flächenvergrößerung keine wesentliche Verbesserung hinsichtlich der Frequenzänderung mehr ergibt.

Die Erregung der Schwingungen des mechanischen Schwingungssystems erfolgt stets mit seiner Eigenresonanzfrequenz, auch wenn diese sich ändert. Dies geschieht nach einem üblichen Verfahren dadurch, daß das mechanische Schwingungssystem selbst als frequenzbestimmendes Glied eines elektrisches Schwingungserzeugers dient. Zu diesem Zweck sind die beiden Elektroden 59 und 61 des Empfangswandlers 71 mit dem Eingang eines nicht dargestellten Versärkers verbunden, an dessen Ausgangsklemmen einerseits die Elektroden 53, 57 und andererseits die Elektrode 55 des Erregungswandlers 70 angeschlossen sind. Die Frequenz der an den Erregungswandler 70 angelegten Wechselspannung folgt daher stets der Eigenresonanzfrequenz des mechanischen Schwingungssystems.

Es hat sich gezeigt, daß sich mit dem beschriebenen Aufbau des Schwingungssystems 21, 22, 31, und des Erregungs- und Empfangswandler 4 bereits bei sehr geringfügigen Änderungen der mitgeführten Masse eine ausgeprägte Änderung der Eigenresonanzfrequenz ergibt. Diese ausgeprägte Änderung der Eigenresonanzfrequenz tritt auch, bei den, durch die konkave Vorspannung der Membran 31 verursachte größere Schwingungsamplitude der Schwingstäbe 21, 22 auf.

Die in Abhängigkeit vom Ausgangssignal des Empfangswandlers 71 gesteuerte, nicht dargestellte Einrichtung, zur Auslösung von Anzeige- und/oder Schaltvorgängen ist vorzugsweise so ausgebildet, daß sie auf Frequenzänderungen anspricht. Es ist aber auch ohne weiteres möglich, die von dem Ausgangssignal des Empfangswandlers gesteuerte Einrichtung so auszulegen, daß sie auf Änderungen der Amplitude der Schwingstäbe 21, 22 anspricht. Unabhängig von der Auswertung der Frequenzänderung oder Amplitudenänderung genügt eine verhältnismäßig kleine Wechselspannung zur Ansteuerung des Erregungswandlers. Es hat sich gezeigt, daß mit der beschriebenen Ausbildung eine Anregungsspannung von 10 V zur Erzielung der Ansprechempfindlichkeit genügt. Die niedrige Anregungsspannung ist insbesondere bei Anwendungen in explosionsgefährdeten Bereichen vorteilhaft.

Verbunden mit der niedrigen Anregungsspannung und der, durch die konkave Vorspannung der Membran 31 verursachte größere Schwingungsamplitude der Schwingstäbe 21, 22 ist eine geringe erforderliche Anregungsleistung, die den Aufbau der elektronischen Schaltung vereinfacht und verbilligt. Auch kann der Ansprechpunkt sehr genau eingestellt werden. So ist es beispielsweise möglich, den Übergang zwischen Luft und einem Schaum oder zwischen einem Schaum und einer Flüssigkeit zu detektieren.

## Patentansprüche

1. Vorrichtung zur Feststellung und/oder Überwachung eines vorbestimmten Füllstandes in einen Behälter, mit einem mechanischen Schwingungsgebilde, das mindestens zwei in den Behälter ragende Schwingstäbe (21, 22) aufweist, die im Abstand voneinander an einer an ihrem Rand eingespannten Membran (31) befestigt sind, welches Schwingungsgebilden weiter einen Erregungs- und Empfangswandler (4) aufweist, der mit wenigstens einem von einer Wechselspannung erregbaren ersten piezoelektrischen Element (54, 56) zur Erregung der Schwingstäbe in gegensinnige Schwingungen quer zu ihrer Längsachse, und wenigstens einem weiteren piezoelektrischen Element (60) zum Empfangen und Umwandeln der Schwingungen des mechanischen Schwingungsgebildes in ein elektrisches Ausgangssignal versehen ist, wobei die piezoelektrischen Elemente (54, 56, 60) in einem Stapel (50) angeordnet sind,
gekennzeichnet durch die folgenden Merkmale:
a) auf der, den Schwingstäben (21), (22) abgewandten Seite der Membran (31) ist eine Spannschraube (41) fest mit der Membran (31) verbunden,
b) der Erregungs- und Empfangswandler (4) ist in Stapelrichtung der piezoelektrischen Elemente von der Spannschraube (41) durchdrungen,
c) der Erregungs- und Empfangswandler (4) ist unter konkaver Vorspannung der Membran (31) zwischen der Membran (31) und einer auf die Spannschraube gedrehten 6kant-Mutter (43) eingespannt.

2. Vorrichtung nach Anspruch 1, dadurch gekennzeichnet,
daß zur Bildung des Erregungs- und Empfangswandlers (4) der Stapel (50) aus den ersten und den weiteren ringförmigen piezoelektrischen Elementen (54, 56, bzw. 60), ersten Elektrodenringen (53, 55, 57), zweiten Elektrodenringen, (59, 61), Isolierringen (52, 58, 62, 64), einem ersten Metallring (51), einem zweiten Metallring (65) sowie der Spannschraube (41) besteht, wobei die ersten ringförmigen piezoelektrischen Elemente (54 , 56) mit den ersten Elektrodenringen (53, 55, 57) den Erregungswandler (70) und das weitere ringförmige piezoelektrische Element (60) mit den zweiten Elektrodenringen (59, 61), den Empfangswandler (71) des Erregungs- und Empfangswandlers (4) bilden.

3. Vorrichtung nach Anspruch 1, dadurch gekennzeichnet,
daß die Membran (31) durch festziehen oder lösen der Mutter (43) an der Spannschraube (41) unter gleichzeitiger Ausrichtung und Befestigung des Stapels (50) vorgespannt und eingestellt ist.

4. Vorrichtung nach Anspruch 1, dadurch gekennzeichnet,
daß die Spannschraube (41) von einem Isolierkörper (42) umschlossen ist, welcher die elektrische Isolation zwischen der Spannschraube (41) und dem Stapel (50) bildet.

5. Vorrichtung nach Anspruch 2, dadurch gekennzeichnet,
daß der erste Metallring (51) an dem einen Ende, und der zweite Metallring (65) an dem anderen Ende des Stapels (50) angeordnet ist.

6. Vorrichtung nach Anspruch 4, dadurch gekennzeichnet,
daß der erste Metallring (51) an dem, der Membran (31) zugewandten Ende des Stapels (50) angeordnet ist.

7. Vorrichtung nach einem der Ansprüche 1, 3, 5, 6 dadurch gekennzeichnet,
daß zwischen der Membran (31) und dem ersten Metallring (51) Druckzapfen (66), (67) eingespannt sind.

8. Vorrichtung nach Anspruch 7, dadurch gekennzeichnet,
daß mindestens zwei Druckzapfen (66), (67) in gleichem Abstand auf einem Kreisring angeordnet sind, dessen Symmetrieachse mit der Symmetrieachse der Membran 31 zusammenfällt und jeder Druckzapfen (66), (67) einem Schwingstab (21), (22) zugeordnet ist, dessen Symmetrieachse mit der Symmetrieachse des zugeordneten Druckzapfens (66), (67) zusammenfällt.

9. Vorrichtung nach Anspruch 2, dadurch gekennzeichnet,
daß wenigstens ein weiterer, nicht an einem ringfömigen piezoelektrischen Element anliegender auf Masse potential liegender Elektrodenring (63) als Abschirmung für das ringförmige piezoelektrische Element (60) des Empfangswandlers (71) angeordnet ist.

10. Vorrichtung nach Anspruch 2, dadurch gekennzeichnet,
daß das ringförmige piezoelektrische Element (60) des Empfangswandlers (71) mit seinen, auf beiden Seiten anliegenden Elektrodenringen (59, 61) unter Einfügung von Isolierringen (58, 64) zwischen einem, auf Massepotential liegenden Elektrodenring (57) des Erregungswandlers (70) und einem weiteren Elektrodenring (63) angeordnet ist.

11. Vorrichtung nach Anspruch 2, dadurch gekennzeichnet,
daß der Erregungswandler (70) zwei elektrisch parallel und mechanisch in Serie geschaltete ringförmige piezoelektrische Elemente (54, 56) enthält.

12. Vorrichtung nach Anspruch 2, dadurch gekennzeichnet,
daß alle Bestandteile des Stapels (50) im wesentlichen den gleichen ringförmigen Querschnitt haben.

13. Vorrichtung nach Anspruch 2, dadurch gekennzeichnet,
daß an jedem Elektrodenring (53, 55, 57, 59, 61, 63) eine Lötfahne angeformt ist, über welche die Elektrodenringe mit Verbindungsleitungen (44, 45, 46, 47) elektrisch verbunden sind.

14. Vorrichtung nach Anspruch 1, dadurch gekennzeichnet,
daß sie ein zylindrisches Einschraubstück (3) enthält, dessen Innereseinen Hohlraum (35) hat, und die Membran (31) aus einem, nicht von dem Hohlraum (35) des Einschraubstückes (3) durchdrungenen Bereich gebildet ist.

15. Vorrichtung nach Anspruch 1, dadurch gekennzeichnet,
daß die Schwingstäbe (21), (22) so bemessen sind, daß sie durch die Öffnung eines Behälters einführbar sind.

## Claims

1. Apparatus for determining and/or monitoring a predetermined contents level in a container, comprising a mechanical oscillation structure having at least two oscillating rods (21, 22) which project into the container and are secured spaced from each other to a diaphragm (31) clamped at its edge, which oscillation structure further comprises an excitation and receiving transducer (4) having at least one first piezoelectric element (54, 56) excitable by an ac voltage for stimulating the oscillating rods to opposite oscillations transversely of their longitudinal axis, and at least one further piezoelectric element (60) for receiving and converting the oscillations of the mechanical oscillation structure to an electrical output signal, said piezoelectric elements (54, 56, 60) being arranged in a stack (50),
characterized by the following features:
a) on the side of the diaphragm (31) remote from the oscillating rods (21, 22) a clamping screw (41) is fixedly connected to the diaphragm (31),
b) the excitation and receiving transducer (4) is penetrated by the clamping screw (41) in the stacking direction of the piezoelectric elements,
c) the excitation and receiving transducer (4) is clamped with concave prestressing of the diaphragm (31) between said diaphragm (31) and a hexagonal nut (43) screwed on said clamping screw.

2. Apparatus according to claim 1, characterized in that for forming the excitation and receiving transducer (4) the stack (50) consists of said first and said further annular piezoelectric elements (54, 56, and 60, respectively), first electrode rings (53, 55, 57), second electrode rings (59, 61), insulating rings (52, 58, 62, 64), a first metal ring (51), a second metal ring (65) and the clamping screw (41), said first annular piezoelectric elements (54, 56) forming with said first electrode rings (53, 55, 57) the excitation transducer (70) and said further annular piezoelectric element (60) forming with said second electrode rings (59, 61) the receiving transducer (71) of the excitation and receiving transducer (4).

3. Apparatus according to claim 1, characterized in that by tightening or loosening the nut (43) on the clamping screw (41) the diaphragm (31) is biased and set with simultaneous alignment and securing of the stack (50).

4. Apparatus according to claim 1, characterized in that the clamping screw (41) is surrounded by an insulating body (42) which forms the electrical insulation between the clamping screw (41) and the stack (50).

5. Apparatus according to claim 2, characterized in that the first metal ring (51) is arranged at one end and the second metal ring (65) is arranged at the other end of the stack (50).

6. Apparatus according to claim 4, characterized in that the first metal ring (51) is arranged at the end of the stack (50) facing the diaphragm (31).

7. Apparatus according to any one of claims 1, 3, 5, 6, characterized in that pressure studs (66, 67) are clamped between the diaphragm (31) and the first metal ring (51).

8. Apparatus according to claim 7, characterized in that at least two pressure studs (66, 67) are arranged at equal intervals on a circular ring, the axis of symmetry of which coincides with the axis of symmetry of the diaphragm (31), and each pressure stud (66, 67) is associated with an oscillating rod (21, 22) the axis of symmetry of which coincides with the axis of symmetry of the associated pressure stud (66, 67).

9. Apparatus according to claim 2, characterized in that at least one further electrode ring (63) which is at ground potential and does not bear on an annular piezoelectric element is provided as shield for the annular piezoelectric element (60) of the receiving transducer (71).

10. Apparatus according to claim 2, characterized in that the annular piezoelectric element (60) of the receiving transducer (71) with its electrode rings (59, 61) bearing on both sides is arranged with interposition of insulating rings (58, 64) between an electrode ring (57) of the excitation transducer (70) lying at ground potential and a further electrode ring (63).

11. Apparatus according to claim 2, characterized in that the excitation transducer (70) comprises two annular piezoelectric elements (54, 56) connected electrically in parallel and mechanically in series.

12. Apparatus according to claim 2, characterized in that all the components of the stack (50) have substantially the same annular cross-section.

13. Apparatus according to claim 2, characterized in that on each electrode ring (53, 55, 57, 59, 61, 63) there is an integrally formed soldering lug via which the electrode rings are electrically connected to connecting lines (44, 45, 46, 47).

14. Apparatus according to claim 1, characterized in that it comprises a cylindrical screw-in piece (3) having an interior cavity (35), and in that the diaphragm (31) consists of a region not traversed by the cavity (35) of the screw-in piece (3).

15. Apparatus according to claim 1, characterized in that the oscillating rods (21, 22) are so dimensioned that they can be introduced through the opening of a container.

## Revendications

1. Dispositif pour déterminer et/ou contrôler un niveau de remplissage prédéterminé dans un récipient, équipé d'un système mécanique à vibration qui présente au moins deux barres vibrantes (21, 22) s'élevant dans le récipient et fixées à distance l'une de l'autre sur une membrane (31) montée sur leur bord, et qui présente également un transducteur d'excitation et de réception (4) qui est pourvu d'au moins un premier élément piézoélectrique (54, 56) excitable par une tension alternative pour l'excitation des barres vibrantes en vibrations de sens opposé transversalement à leur axe longitudinal et d'au moins un autre élément piézoélectrique (60) pour la réception et la conversion des vibrations du système mécanique à vibration en un signal électrique de sortie, les éléments piézoélectriques (54, 56, 60) étant disposés dans une pile (50), caractérisé par les particularités suivantes :
a) sur le côté opposé aux barres vibrantes (21), (22) de la membrane (31), une vis de serrage (41) est reliée de façon fixe à la membrane (31),
b) le transducteur d'excitation et de réception (4) est traversé dans le sens d'empilement des éléments piézoélectriques par la vis de serrage (41).
c) le transducteur d'excitation et de réception (4) est serré sous prétension concave de la membrane (31) entre la membrane (31) et une vis à tête hexagonale (43) tournée sur la vis de serrage.

2. Dispositif selon la revendication 1, caractérisé en ce que, pour former le transducteur d'excitation et de réception (4), la pile (50) comprend les premiers et autres éléments piézoélectriques (54, 56 et 60) de forme annulaire, les premières bagues d'électrode (53,55,57), les deuxièmes bagues d'électrode (59, 61), des bagues isolantes (52, 58, 62, 64), une première bague métallique (51), une deuxième bague métallique (65) et la vis de serrage (41), les premiers éléments piézoélectriques (54,56) de forme annulaire formant le transducteur d'excitation (70) avec les premières bagues d'électrode (53, 55, 57) et l'autre élément piézoélectrique (60) de forme annulaire formant le transducteur de réception (71) du transducteur d'excitation et de réception (4) avec les deuxièmes bagues d'électrode (59,61),

3. Dispositif selon la revendication 1, caractérisé en ce que la membrane (31) est prétendue et réglée en bloquant ou en desserrant l'écrou (43) sur la vis de serrage (41) tout en alignant et fixant la pile (50).

4. Dispositif selon la revendication 1, caractérisé en ce que la vis de serrage (41) est entourée par un corps isolant (42) qui forme l'isolation électrique entre la vis de serrage (41) et la pile (50).

5. Dispositif selon la revendication 2, caractérisé en ce que la première bague métallique (51) est disposée à une extrémité de la pile (50) et la deuxième bague métallique (65) à l'autre extrémité.

6. Dispositif selon la revendication 4, caractérisé en ce que la première bague métallique (51) est disposée à l'extrémité de la pile (50) tournée vers la membrane (31).

7. Dispositif selon l'une des revendications 1,3,5,6, caractérisé en ce que des tenons presseurs (66), (67) sont fixés entre la membrane (31) et la première bague métallique (51).

8. Dispositif selon la revendication 7, caractérisé en ce qu'au moins deux tenons presseurs (66), (67) sont disposés à même distance sur un anneau circulaire dont l'axe de symétrie coïncide avec l'axe de symétrie de la membrane 31 et dont chaque tenon presseur (66), (67) est attribué à une barre vibrante (21), (22) dont l'axe de symétrie coïncide avec l'axe de symétrie du tenon presseur attribué (66), (67).

9. Dispositif selon la revendication 2, caractérisé en ce qu'au moins un autre anneau d'électrode (63) qui n'est pas situé près d'un élément piézoélectrique de forme annulaire et qui se trouve au potentiel de masse est disposé comme écran pour l'élément piézoélectrique (60) de forme annulaire du transducteur de réception (71).

10. Dispositif selon la revendication 2, caractérisé en ce que l'élément piézoélectrique (60) de forme annulaire du transducteur de réception (71) avec ses bagues d'électrode (59, 61) attenantes des deux côtés est disposé, avec l'insertion des bagues isolantes (58,64) entre un anneau d'électrode (57) se trouvant au potentiel de masse du transducteur d'excitation (70) et une autre bague d'électrode (63).

11. Dispositif selon la revendication 2, caractérisé en ce que le transducteur d'excitation (70) contient deux éléments piézoélectriques (54, 56) de forme annulaire, montés électriquement en parallèle et mécaniquement en série.

12. Dispositif selon la revendication 2, caractérisé en ce que tous les éléments constitutifs de la pile (50) ont dans l'ensemble la même section transversale de forme annulaire.

13. Dispositif selon la revendication 2, caractérisé en ce qu'à chaque bague d'électrode (53, 55, 57, 59, 61, 63), se trouve une cosse à braser par laquelle les anneaux d'électrode sont reliés électriquement à des lignes de connexion (44, 45, 46, 47).

14. Dispositif selon la revendication 1, caractérisé en ce qu'il contient une pièce à visser (3) cylindrique dont l'intérieur a une cavité (35) et en ce que la membrane (31) est constituée d'une zone non traversée par la cavité (35) de la pièce à visser (3).

15. Dispositif selon la revendication 1, caractérisé en ce que les barres vibrantes (21), (22) sont dimensionnées de telle façon qu'elles peuvent introduites par l'orifice d'un récipient.
